**Europäisches Patentamt**

**European Patent Office**

**Office européen des brevets**

(19)

(11) Veröffentlichungsnummer : **0 004 882**
**B1**

(12)

# EUROPÄISCHE PATENTSCHRIFT

(45) Veröffentlichungstag der Patentschrift :
**11.02.81**

(21) Anmeldenummer : **79100929.3**

(22) Anmeldetag : **28.03.79**

(51) Int. Cl.³ : **C 04 B 19/04**

(54) **Verfahren zur Herstellung von Brandschutz-Formkörpern auf Basis von Alkalisilikaten.**

(30) Priorität : **20.04.78 DE 2817268**

(43) Veröffentlichungstag der Anmeldung :
**31.10.79 (Patentblatt 79/22)**

(45) Bekanntmachung des Hinweises auf die Patenterteilung : **11.02.81 Patentblatt 81/06**

(84) Benannte Vertragsstaaten :
**BE DE FR GB IT NL**

(56) Entgegenhaltungen :
**DE - A - 2 725 779**
**DE - B - 1 246 514**
**GB - A - 1 471 011**
**US - A - 2 377 484**

(73) Patentinhaber : **BASF Aktiengesellschaft**
**Carl-Bosch-Strasse 38**
**D-6700 Ludwigshafen (DE)**

(72) Erfinder : **Zuern, Ludwig, Dr.**
**Halsbergstrasse 2 a**
**D-6702 Band Duerkheim 1 (DE)**
Erfinder : **Caesar, Arndt Christian**
**Moerscher Strasse 98 a**
**D-6710 Frankenthal (DE)**
Erfinder : **Koegel, Wolfram**
**Thueringer Strasse 31**
**D-6800 Mannheim 41 (DE)**

## Verfahren zur Herstellung von Brandschutz Formkörpern auf Basis von Alkalisilikaten

Die Erfindung betrifft ein Verfahren zur Kontinuierlichen Herstellung von Brandschutz-Formkörpern durch getrennte Zugabe von festem Alkalisilikatpulver und einer flüssigen Alkalisikat-Lösung bzw. — Suspension auf ein Trägerband und anschließendes Verfestigen der Mischung mit definiertem Wassergehalt.

Brandschutz-Formkörper aus wasserhaltigen Alkalisilikaten sind seit langem bekannt und werden bereits vielfältig für den vorbeugenden Brandschutz eingesetzt. Sie bewirken bei höheren Temperaturen, wie sie z.B. im Brandfal auftreten, durch Schaumbildung, Volumenvergrößerung und Ausbildung eines Schäumdrucks eine hervorragende Isolierung gegen Feuer und führen eine Abdichtung von Fugen und Spalten in Baukörpern herbei.

In den DE-AS 11 69 832 und 14 71 005 ist die Herstellung solcher Formkörper durch Vergießen von flüssigen Alkalisilikaten mit eingebetteten Fasern oder Geweben beschrieben. Bei diesen Verfahren muß eine aufwendige Trocknung der Formkörper durchgeführt werden, die auch bei dünneren Formkörpern, z.B. 2 mm dicken Platten oder Streifen, selbst bei Einsatz leistungsfähiger Trockenapparaten einige Stunden dauern.

In der DE-AS 11 76 546 ist ein Verfahren zur Herstellung von wasser- und faserhaltigen Formkörpern aus Alkalisilikaten beschrieben, das auch kontinuierlich durchgeführt werden kann. Hier geht man von einer wäßrigen Suspension von Alkalisilikatpartikeln in einer Alkalisilikat-Lösung aus, in die auf einem Trägermaterial Verstärkungsfasern eingebettet werden. Damit die Suspension noch genügend fließfähig ist, muß sie mehr als 40 Gew.% Wasser enthalten. Würde man eine solche Mischung gelieren, ohne dabei Wasser zu entfernen, so würde die entstandene Brandschutzplatte eine für die praktische Anwendung nicht ausreichende Festigkeit aufweisen. Aus diesem Grund werden also auch hier erhebliche Mengen Wasser durch Trocknen entfernt (Beispiel 8 der DE-AS 11 76 546).

In der DE-AS 2 725 779 ist ein Verfahren zum Überziehen von Substraten mit feuerhemmenden Schichten auf Basis von Natriumsilikaten beschrieben. Dabei wird eine wässrige Lösung von Natriumsilikat mit hydratisierten wasserlöslichen Silikat-Teilchen homogen vorgemischt, diese Mischung wird auf das Substrat aufgebracht und dort geliert. Diese Druckschrift gibt keine Anregungen für die kontinuierliche Herstellung von Brandschutz-Formkörpern.

Der Erfindung lag die Aufgabe zugrunde, ein rasch und kontinuierlich durchführbares und wenig Energie kostendes Verfahren zur Herstellung von Brandschut-Formkörpern mit genügend hoher Festigkeit zu entwickeln.

Es wurde gefunden, daß Brandschutz-Formkörpern besonders günstig hergestellt werden können, wenn man auf einem endlosen Trägerband festes Alkalisilikatpulver und flüssige Alkalisilikat-Lösung oder- Suspension getrennt voneinander aufgibt, wobei die Mischung geliert und sich zu einem Formkörper verfestigt. Die aufwendige Trocknung entfällt dabei völlig, während die Vorteile der Verwendung einer flüssigen Phase zur Formgebung und zum sicheren Einbetten von Verstärkungsmaterialien erhalten bleiben. Der bei Verwendung von Alkalisilikaten notwendige Wasserentzug wird bei dem erfindungsgemäßen Verfahren vor die Formgebung der Erzeugnisse verlegt. Technologisch ausgereifte Verfahren, wie z.B. Sprüh- oder Walzentrocknung, führen energiesparend zu preiswerten Angeboten von entwässerten Alkalisilikatpulvern.

Das erfindungsgemäße Verfahren erlaubt auf eine einfache Weise Brandschutz-Formkörper auch mit großen Dicken, vorzugsweise zwischen, 0,5 und 100 mm, herzustellen, die für das Zuschäumen von Fugen, Spalten und Öffnungen größerer Breite nötig sind. Die bisher angewendeten Verfahren erlaubten nur die wirtschaftliche Herstellung von Wandstärken oder Plattendicken von maximal etwa 3 mm, da das Wasser nur sehr langsam aus der ausgegossenen Flüssigkeit diffundiert. Die erfindungsgemäß hergestellten Formkörper besitzen auch bei größerer Wanddicke nach Beendigung der Formgebung den erwünschten Endwassergehalt. Eventuelle Feuchtigkeitsunterschiede im fertigen Formkörper werden von selbst ausgeglichen. Gegebenenfalls können besonders dicke Körper durch mehrfaches, schichtweise aufeinanderfolgendes Aufbringen von Flüssigkeit und Alkalisilikatpulver hergestellt werden. Das erfindungsgemäße Verfahren ermöglicht durch die kontinuierliche Arbeitsweise eine besonders wirtschaftliche Fertigung von Platten- oder Streifenmaterial. Die beschriebenen Verfahrensschritte sind bei Verwendung eines endlosen, umlaufenden Trägerbandes mit bekannten, handelsüblichen Maschinen und Geräten durchführbar. Das Fertigprodukt verläßt die Anlagen, ohne daß manuelle Eingriffe erforderlich sind.

Als Flüssigkeit kann eine Alkalisilikat-Lösung oder eine Alkalisilikat-Suspension eingesetzt werden. Die Alkalisilikat-Lösung soll dabei vorzugsweise einen Wassergehalt von 50 bis 90, insbesondere von 50 bis 75 Gew.% haben. Grundsätzlich sind auch Lösungen mit höherem Wassergehalt verwendbar; nur verlängert sich dann das Verfahren stark, da die Benetzung des Pulvers schwierig wird. Die Alkalisilikat-Suspension ist eine Mischung aus Wasser oder Alkalisilikat-Lösung mit pulverförmigem, festem Alkalisilikat. Sie weist einen Wassergehalt von 40 bis 60, vorzugsweise von 45 bis 55 Gew.% auf. Eine Mischung von Alkalisilikat-Lösung mit Alkalisikat-Pulver hat sich dabei als besonders vorteilhaft erwiesen, weil sich hier durch die Vorwegnahme eines Teils der Benetzung das Pulver mit der Flüssigkeit besser benetzt. Dies kann durch Rühren oder Quirlen während der Herstellung der Suspension noch beschleunigt und intensiviert werden.

Die Flüssigkeit kann gegebenenfalls mit üblichen Zusatzmitteln, wie Netzmittel, Farb- oder Füllstoffen usw. gemischt werden.

Die Menge des zuzugebenden festen Alkalisilikatpulvers richtet sich nach der gewünschten Endfeuchte des herzustellenden Formkörpers. Diese soll 20 bis 40 Gew.%, vorzugsweise 25 bis 35 Gew.%, betragen. Sie richtet sich weiter nach der Zeit, die bis zur völligen Benetzung aller pulverförmigen Teilchen bzw. bis zum völligen Aufsaugen der Flüssigkeit benötigt wird, sowie nach dem Wassergehalt der eingesetzten Alkalisilikate. Das feste Alkalisilikatpulver weist vorzugsweise mittlere Wassergehalte zwischen 0 und 30, vorzugsweise zwischen 5 und 20 Gew.% auf. Das Mengenverhältnis der wasserfreien Silikate in den beiden zusammenzugebenden Komponenten soll vorzugsweise zwischen 1 : 10 und 10 : 1 liegen.

Die eingesetzten Alkalisilikate sind vorzugsweise Silikate des Natriums, des Kaliums oder des Lithiums mit einem Molverhältnis $Me_2O : SiO_2$ von 1 : 1 bis 1 : 6, vorzugsweise von 1 : 2,5 bis 1 : 4.

Zu jedem Zeitpunkt im Verlauf des Verfahrens können Verstärkungsmaterialien zugegeben werden in Form von mineralischen, metallischen oder textilen Fasern, Geweben oder Gittern in Mengen von 0,5 bis 25 Gew.%, vorzugsweise von 2 bis 15 Gew.%, bezogen auf das Brandschutzmaterial.

Der Auftrag der flüssigen Phase erfolgt vorteilhaft über Gießmaschinen, Zuteilwalzen, gegebenenfalls mit Abstreifer, über mit Düsen ausgerüstete Vorratstrichter oder unter Anwendung von Drücken über Düsen, Brausen oder Sprühgeräte. Das Aufstreuen des Alkalisilikatpulvers erfolgt z.B. durch Walzenzuteilapparate, wobei die Menge durch Drehzahl der Walze, durch Schieber oder durch die Füllhöhe des Vorratstrichters leicht geregelt werden kann. Die Oberfläche der Walze kann glatt oder profiliert sein. Ein Kühlen oder Beheizen der Walzen ist je nach Feuchtigkeit oder sonstiger Eigenschaften des Alkalisilikatpulvers oder der Zuschlagstoffe angebracht. Grundsätzlich sind auch andere Pulverdosiervorrichtungen einsetzbar.

Die Reihenfolge der Zugabe von Alkalisilikatpulver, Flüssigkeit und Verstärkungsmaterialien ist beliebig. Man kann z.B. erst Glasfasern auf das Band aufstreuen, dann die Flüssigkeit aufsprühen und zuletzt das Alkalisilikatpulver zusetzen, doch ist diese Reihenfolge auch umkehrbar. Man kann auch Alkalisilikatpulver und Glasfasern gemeinsam zugeben und dann mit der Flüssigkeit tränken.

Die Feststoffe verteilen sich auf dem Band gleichmäßig in der Flüssigkeit, so daß eine einheitliche Mischung entsteht. Diese verfestigt sich durch Gelieren. Das Gelieren kann durch kurzzeitiges Beheizen, z.B. mittels Infrarotstrahler auf Temperaturen zwischen 40 und 95 °C oder durch Einwirkung von Schwingungen, z.B. durch Rüttler oder Vibratoren, beschleunigt werden. Dies hat sich bei kontinuierlicher Herstellung in größerem Maßstab als besonders vorteilhaft erwiesen, da sich hierdurch ein Endlosband herstellen läßt, das ohne Nachbehandlung vom Trägerband abgezogen werden kann. Von besonderer Bedeutung ist, daß beim Gelieren der Mischung praktisch kein Wasserentzug erfolgt, auch dann nicht, wenn sie kurzzeitig beheizt wird. Es findet im wesentlichen eine Anpassung der Wassergehalte der Alkalisilikate von Pulver- und Flüssigkeitsphase statt, wodurch eine einheitliche feste Masse entsteht.

Die Formung der Formkörper durch Glätten, Kalibrieren, Pressen, Verdichten, Prägen oder Schneiden sowie ein eventuelles Aufbringen von Überzügen erfolgt mit bekannten Maschinen und Geräten. Diese Vorgänge lassen sich in die kontinuierlich laufende Herstellung einfügen. Überzüge aus Kunststoff oder Metall, vorzugsweise Lacke auf Basis von Polyvinylchlorid, Expoxidharzen oder Polyurethanen, sowie Aluminiumfolien, schützen die Formkörper gegen mechanische Beanspruchung und vor allem gegen Eindringen von Kohlendioxid und Wasser, sowie gegen Wasserverlust durch Austrocknen.

Die mit den bisher bekannten Brandschutz-Formkörpern erzielten Eigenschaften, wie leichte Formgebung, besonders für flächige Formkörper, gute Elastizität bei großer Festigkeit, gute Bearbeitungseigenschaften sowie leichtes Einarbeiten von faser oder gewebeartigen Verstärkungsmaterialien bei der Herstellung, werden bei Anwendung des erfindungsgemäßen Verfahrens ebenso erreicht, wobei die nachteilige Trocknung der Formkörper vermieden wird. Die brandschutztechnisch wichtigen Eigenschaften, wie Schäumen und Erzeugung eines erheblichen Schäumdruckes, die Isolationswirkung und Nichtbrennbarkeit des im Brandfall entstehenden Schaumes, sind besonders günstig.

Die in den Beispielen genannten Teile und Prozente beziehen sich auf das Gewicht.

Beispiel 1

Auf ein mit einer Geschwindigkeit von 4 m/min laufendes, ebenes, endloses Gummiband werden 200 g/m² auf 50 mm Länge geschnittene Glasfasern auf eine Breite von etwa 500 mm gleichmäßig gestreut.

Hierauf wird auf die gleiche Breite eine Suspension in einer Menge von 1 600 g/m² aufgedüst. Die Suspension wurde hergestellt durch Verrühren von 100 Teilen Natriumsilikatlösung mit einem Feststoffgehalt von 35 % und 33 Teilen Natriumsilikatpulver mit einem Wassergehalt von 16 Gew.%. Die Korngrößenverteilung des Pulvers war etwa folgende:

$> 100\ \mu = 15\ \%$
$< 100\ \mu = 25\ \%$
$>\ \ 63\ \mu = 25\ \%$
$<\ \ 63\ \mu = 60\ \%$

Auf diesen Aufguß wird mit einer Walzenzuteilmaschine Natriumsilikatpulver mit einem Wassergehalt von 16 % in einer Menge von 1 230 g/m² aufgestreut, so daß ein Endlosband von etwa 2 mm Stärke entsteht.

Durch Infrarot-Strahler (Einwirkungsdauer etwa 2 Minuten) wird die Mischung auf 80 °C aufgewärmt, wobei sie geliert und sich verfestigt. Nach Durchlaufen einer Kühlstrecke wird die Masse auf etwa 40 °C abgekühlt, vom Gummiband entnommen und auf Format geschnitten.

Die entstehenden Streifen von 500 mm Breite und beliebiger Länge weisen den gewünschten Wassergehalt von 34 % auf. Sie besitzen große Festigkeit bei genügender Elastizität (Biegsamkeit) und bilden bei Erhitzen auf 600 °C einen sehr festen, dichten, feinkörnigen Schaum, der etwa die 10-fache Stärke des Ursprungsstreifens besitzt.

Die erzeugten Streifen sind nach Aufbringen einer Schutzschicht für die Verwendung als Brandschutz-Formkörper geeignet.

## Beispiel 2

Auf ein ebenes, endlos umlaufendes Band wird eine Textilglasmatte mit 250 g Glasfasern/m$^2$ aufgelegt. Hierauf wird über einen Walzenzuteiler Natriumsilikatpulver in einer Menge von 2 000 g/m$^2$ gleichmäßig gestreut. Das Pulver verteilt sich über die Dicke der Glasfasermatte so gleichmäßig, daß die anschließend aufgegebene Suspension mit einer Menge von 2 250 g/m$^2$ die vorgelegten Materialien gut durchtränkt. Die Masse geliert und verfestigt sich dadurch zu einem etwa 3 mm dicken, endlosen Strang. Nach Schneiden zu Streifen oder Platten zeigt der Formkörper bei Wärmeeinwirkung oberhalb 100 °C das erwünschte Aufschäumen.

Das verwendete Natriumsilikatpulver hat einen Restwassergehalt von 9,0 Gew.% und einen Kornanteil von 60 % < 0,2 mm, davon 25 Gew.% < 0,1 mm. Die Suspension mit einem Feststoffgehalt von 46,7 Gew.% wurde aus 3 Gewichtsteilen Natriumsilikatlösung mit 35 Gew.% Feststoffgehalt und 1 Gewichsteil Natriumsilikatpulver mit 82 Gew.% Feststoffgehalt hergestellt. Der fertige Formkörper weist in der faserfreien Masse den gewünschten Restwassergehalt von etwa 33 Gew.% auf.

## Beispiel 3

Nach dem gleichen Verfahren wie im Beispiel 2 wird auf das endlos umlaufende Band und die Textilglasmatte 1 600 g/m$^2$ des Natriumsilikatpulvers gestreut.

Darauf wird anstelle der Suspension eine 35 %-ige Alkalisilikatlösung in einer Menge von 1 230 g/m$^2$ aufgegeben. Die Verteilung und Durchtränkung wird durch Rollen mit Riffelwalzen verstärkt.

Es entsteht auch hierbei durch Gelieren und Verfestigen ein endloses Band mit einer Stärke von etwa 2 mm. Bei genügender Festigkeit wird durch den erreichten Wassergehalt von 33 %, bezogen auf die faserfreie Masse, eine hervorragend flexible Brandschutzplatte erhalten.

## Ansprüche

1. Verfahren zur kontinuierlichen Herstellung von Brandschutz-Formörpern auf Basis von Alkalisilikaten mit einem Wassergehalt zwischen 20 und 40 Gew.% durch Gelieren und Verfestigen einer Mischung, die Wasser, Alkalisilikat und gegebenenfals Verstärkungsmaterialien enthält, auf einem endlosen, laufenden Trägerband, *dadurch gekennzeichnet,* daß festes Alkalisilikatpulver und eine flüssige Alkalisilikat-Lösung oder -Suspension getrennt voneinander auf das Band aufgegeben werden, und die Feststoffe sich auf dem Band gleichmäßig in der Flüssigkeit verteilen, wobei die entstandene Mischung geliert.

2. Verfahren nach Anspruch 1, *dadurch gekennzeichnet,* daß die Alkalisilikate Silikate des Natriums Kaliums oder Lithiums sind mit einem Molverhältnis Me$_2$O : SiO$_2$ von 1 : 1 bis 1 : 6.

3. Verfahren nach Anspruch 1, *dadurch gekennzeichnet,* daß als Verstärkungsmaterialien mineralische, metallische oder textile Fasern, Gewebe oder Gitter zugegeben werden, und daß deren Menge 0,5 bis 25 Gew.%, bezogen auf das Brandschutzmaterial, beträgt.

4. Verfahren nach Anspruch 1, *dadurch gekennzeichnet,* daß Formteile in einer Stärke von 0,5 bis 100 mm hergestellt werden, durch gegebenenfalls mehrfaches, schichtweise aufeinanderfolgendes Aufbringen von Feststoffen und Flüssigkeiten auf das Band.

5. Verfahren nach Anspruch 1, *dadurch gekennzeichnet,* daß festes Alkalisilikatpulver mit einem mittleren Wassergehalt zwischen 0 und 30, vorzugsweise zwischen 5 und 20 Gew.%, zusammengegeben wird mit einer flüssigen Alkalisilikat-Suspension mit einem Wassergehalt zwischen 40 und 60, vorzugsweise zwischen 45 und 55 Gew.%, wobei die Mengenverhältnisse so gewählt werden, daß sich die Anteile der trockenen Silikate in den beiden Komponenten wie 10 : 1 bis 1 : 10 verhalten.

## Claims

1. A process for the continuous production of fire protection mouldings based on alkali metal silicates having a water content of from 20 to 40 % by weight by gelling and solidifying a mixture containing water, alkali metal silicate and optionally reinforcing water, alkali metal silicate and optionally reinforcing materials, on a running endless carrier belt, *characterized in that* solid alkali metal silicate powder and a liquid alkali metal silicate solution or suspension are separately applied to the belt and the solids become uniformly distributed in the liquid on the belt, the resulting mixture undergoing gelation.

2. A process as claimed in claim 1, *characterized in that* the alkali metal silicates are silicates of sodium, potassium or lithium with a molar ratio MeO$_2$ : SiO$_2$ of from 1 : 1 to 1: 6.

3. A process as claimed in claim 1, *characteri-*

zed in that mineral, metallic or textile fibres, fabrics or grids are added as reinforcing materials and that their quantity is from 0.5 to 25 % by weight, based on the fire protection material.

4. A process as claimed in claim 1, *characterized in that* moldings having a thickness of from 0.5 to 100 mm are produced by, if desired, multiple application, in successive layers, of solids and liquids to the belt.

5. A process as claimed in claim 1, *characterized in that* solid alkali metal silicate powder having a mean water content of from 0 to 30 % by weight, preferably from 5 to 20 % by weight, is combined with a liquid alkali metal silicate suspension having a water content of from 40 to 60 % by weight, preferably of from 45 to 55 % by weight, the relative proportions being so chosen that the ratio between the dry silicates in the two components is from 10 : 1 to 1 : 10.

**Revendications**

1. Procédé pour la fabrication continue d'éléments façonnés en matériau ignifuge à base de silicates alcalins avec une teneur en eau comprise entre 20 et 40 % en poids par gélification et durcissement d'un mélange formé d'eau et de silicate alcalin et contenant éventuellement des matériaux de renforcement sur une courroie transporteuse sans fin en mouvement, caractérisé en ce que du silicate alcalin pulvérulent solide et une solution ou suspension liquide de silicate alcalin sont amenés séparément sur la courroie en mouvement, sur laquelle les matières solides se répartissent uniformément dans le liquide et le mélange formé se gélifie.

2. Procédé suivant la revendication 1, caractérisé en ce que les silicates alcalins sont choisis parmi les silicates de sodium, de potassium et de lithium et le rapport molaire Me$_2$O : SiO$_2$ est compris entre 1 : 1 et 1 : 6.

3. Procédé suivant la revendication 1, caractérisé en ce que les matériaux de renforcement sont choisis parmi les fibres, tissus et treillis minéraux, textiles ou métalliques et employés dans des proportions de 0,5 à 25 % en poids par rapport au matériau ignifuge.

4. Procédé suivant la revendication 1, caractérisé en ce qu'il est mis en œuvre pour la fabrication d'éléments façonnés d'une épaisseur de 0,5 à 100 mm, réalisés le cas échéant par le dépôt de plusieurs couches successives de matières solides et de liquide sur la courroie transporteuse.

5. Procédé suivant la revendication 1, caractérisé en ce que l'on ajoute les silicates alcalins pulvérulents, avec une teneur moyenne en eau comprise entre 0 et 30 % en poids, de préférence entre 5 et 20 % en poids, à une suspension liquide de silicates alcalins, avec une teneur en eau comprise entre 40 et 60 % en poids, de préférence entre 45 et 55 % en poids, le rapport pondéral étant choisi de telle manière que les parties de silicates séchés soient présents dans les deux composants de 10 : 1 à 1 : 10.